# EUROPÄISCHE PATENTSCHRIFT

(11) **EP 1 850 445 B1**
(45) Veröffentlichungstag und Bekanntmachung des Hinweises auf die Patenterteilung: **06.04.2016**
(21) Anmeldenummer: 07008548.5
(22) Anmeldetag: 26.04.2007
(51) Int. Cl.: H02J 7/00, B60L 11/18

(54) **Batterieladestelle und zugehöriges Betriebs-und Herstellungsverfahren**
Battery charging device and corresponding operating and manufacturing method
Point de chargement de batterie et procédé de fonctionnement et de fabrication correspondant

(30) Priorität: 26.04.2006 DE 102006019427
(43) Veröffentlichungstag der Anmeldung: 31.10.2007
(73) Patentinhaber: Linzmeier Bauelemente GmbH, 88499 Riedlingen (DE)
(72) Erfinder: Linzmeier, Andreas, 88499 Riedlingen (DE)
(74) Vertreter: Beier, Ralph

(56) Entgegenhaltungen:
- EP-A- 0 552 736
- EP-A- 1 362 618
- DE-U1- 9 214 266
- DE-U1-202004 019 510
- US-A- 5 847 537
- US-A- 5 975 371

## Beschreibung

Die Erfindung betrifft eine Batterieladestelle mit einem Batterieladegerät zum Aufladen einer wiederaufladbaren elektrischen Batterie, insbesondere einer Batterie eines Elektrofahrzeugs, gemäß Anspruch 1.

Weiterhin betrifft die Erfindung ein Betriebsverfahren für eine derartige Batterieladestelle gemäß den nebengeordneten Ansprüchen.

In vielen Betrieben werden Elektrofahrzeuge, wie beispielsweise Gabelstapler, Kehrmaschinen, Elektrohubwagen und ähnliches, eingesetzt, die durch eine wiederaufladbare elektrische Batterie mit Strom versorgt werden. Zum Aufladen der Batterien werden die Elektrofahrzeuge üblicherweise auf einem Parkplatz einer Batterieladestation geparkt und über ein Kabel mit einem Batterieladegerät verbunden.

In Großbetrieben mit einer Vielzahl von Elektrofahrzeugen sind diese Batterieladestationen als separate Räume ausgebildet, die außerhalb des Arbeitsbereichs der Elektrofahrzeuge liegen. Diese räumliche Trennung der Batterieladestationen von dem Arbeitsbereich der Elektrofahrzeuge ist vorteilhaft, weil der Betrieb der Batterieladestationen auf diese Weise nicht von den belastenden Umgebungsbedingungen (z.B. Feuchtigkeit, Staub, Verschmutzung, chemische Einflüsse) im Arbeitsbereich der Elektrofahrzeuge beeinträchtigt wird. Ein weiterer Vorteil dieser separaten Batterieladestationen besteht darin, dass die Batterieladegeräte in stationären Montageschränken geschützt untergebracht sind.

In kleinen Betrieben mit einer geringen Anzahl von Elektrofahrzeugen lohnt sich die Einrichtung derartiger separater Räume für Batterieladestationen nicht, so dass dort in der Regel mobile Batterieladegeräte eingesetzt werden, die im Arbeitsbereich der Elektrofahrzeuge angeordnet sind, beispielsweise in einer Ecke einer Werkstatt oder einer Lagerhalle, und dort eine sogenannte Batterieladestelle bilden. Nachteilig an dem Einsatz von mobilen Batterieladegeräten im Arbeitsbereich der Elektrofahrzeuge ist die Tatsache, dass die belastenden Umgebungsbedingungen (z.B. Verschmutzung) im Arbeitsbereich der Elektrofahrzeuge den Betrieb der Batterieladegeräte beeinträchtigen können. Im Extremfall kann diese Beeinträchtigung zu einer Überhitzung der Batterieladegeräte und schließlich zu einem Brand führen.

Ferner sind aus DE 199 14 408 A1 und DE 299 15 912 U1 Schaltschränke vorgesehen, die beispielsweise EDV-Anlagen aufnehmen können und einen Brandmelder aufweisen. Die Schaltschränke dienen hierbei also nicht zur Aufnahme eines Batterieladegeräts.

Weiterhin sind aus DE 10 2004 011 862 A1 und DE 202 20 394 U1 feuergeschützte Gehäuse bekannt, die sich jedoch nicht zur Aufnahme von Batterieladegeräten eignen.

Ferner ist aus US 5 939 858 eine Transportbox für Batterieladegeräte bekannt, die jedoch keinen Feuerschutz bietet.

Weiterhin ist aus FR 904 559 ein Geräteschrank für einen.Akkumulator bekannt, der jedoch ebenfalls nicht zur Aufnahme eines Batterieladegerätes dient.

Aus DE 20 2004 019 510 U1 ist ein Brandschutzschrank bekannt, der auch ein Ladegerät enthalten kann. Aus dieser Gebrauchsmusterschrift ist jedoch nicht bekannt, dass die Batterie im Brandfall von dem Batterieladegerät getrennt wird.

Aus EP 1 362 618 A1 ist es bekannt, eine elektrische Einrichtung im Brandfall von dem Stromversorgungsnetz zu trennen. Auch diese Patentanmeldung offenbart jedoch nicht den Gedanken, eine Batterie im Brandfall von dem Batterieladegerät zu trennen.

Ferner ist zum Stand der Technik noch hinzuweisen auf US-A-5 847 537 und US-A 5 975 371.

Der Erfindung liegt deshalb die Aufgabe zugrunde, beim Einsatz mobiler Batterieladegeräte außerhalb stationärer Batterieladestationen Brandentwicklungen sicher zu verhindern.

Diese Aufgabe wird durch eine Batterieladestelle gemäß dem Hauptanspruch und durch ein Betriebsverfahren für eine derartige Batterieladestelle gemäß den nebengeordneten Ansprüchen gelöst.

Die Erfindung umfasst die allgemeine technische Lehre, ein mobiles Batterieladegerät nicht ungeschützt im Arbeitsbereich der Elektrofahrzeuge zu betreiben, sondern in einer Sicherheitsbox, die eine Verschmutzung des Batterieladegeräts und eine Beeinträchtigung durch die Umgebungsbedingungen im Arbeitsbereich der Werkzeugmaschine verhindert und dadurch die Brandgefahr nahezu vollständig beseitigt.

Der im Rahmen der Erfindung verwendete Begriff einer Sicherheitsbox stellt vorzugsweise auf ein Gehäuse oder einen Behälter ab, in dem das Batterieladegerät untergebracht ist, um das Batterieladegerät vor den belastenden Umgebungsbedingungen im Arbeitsbereich der Elektrofahrzeuge zu schützen. Die Sicherheitsbox ist deshalb vorzugsweise teilweise oder vollständig geschlossen. Darüber hinaus ist selbstverständlich, dass die Sicherheitsbox hinreichend groß ist, um mindestens ein Batterieladegerät aufzunehmen.

Weiterhin stellt der im Rahmen der Erfindung verwendete Begriff eines Batterieladegeräts vorzugsweise auf Batterieladegeräte für Elektrofahrzeuge ab und ist deshalb zu unterscheiden von Batterieladegeräten für tragbare Elektrogeräte, wie beispielsweise Radios. Bei der erfindungsgemäßen Batterieladestelle weist das Batterieladegerät also vorzugsweise einen Ladestrom auf, der im Ampere-Bereich liegt. Bei dem erfindungsgemäßen Batterieladegerät liegt die Ladespannung dagegen vorzugsweise zwischen 10 V und 50 V, wobei Werte von 12 V oder 24 V üblich sind. Darüber hinaus ist zu erwähnen, dass bei der erfindungsgemäßen Batterieladestelle vorzugsweise ein tragbares Batterieladegerät eingesetzt wird, wodurch sich die erfindungsgemäße Batterieladestelle von den eingangs beschriebenen Batterieladestationen unterscheidet, die in separaten Räumen untergebracht sind.

Ferner stellt der im Rahmen der Erfindung verwendete Begriff einer Batterieladestelle vorzugsweise auf Ladeplätze ab, die in einem Arbeitsbereich angeordnet sind, beispielsweise in einer Lagerhalle oder einer Werkstatt. Davon zu unterscheiden sind die eingangs beschriebenen Batterieladestationen, die in separaten Räumen untergebracht sind.

In einem bevorzugten Ausführungsbeispiel der Erfindung weist die Sicherheitsbox eine Wandung auf, die einen Brandschutz bietet, um bei einer Brandentwicklung in der Sicherheitsbox ein Überschlagen der Flammen auf die Umgebung zu verzögern. Vorzugsweise gehört die Sicherheitsbox deshalb den Brandschutzklassen F30, F60, F90, F120 oder sogar F180 gemäß DIN 4102 oder entsprechenden europäischen Feuerwiderstandsklassen an. Zur Erreichung des gewünschten Brandschutzes weist die Sicherheitsbox vorzugsweise eine Wandung auf, die mindestens teilweise aus Blech besteht. Darüber hinaus weist die Wandung der Sicherheitsbox vorzugsweise eine Brandschutzschicht auf, die beispielsweise aus Faserzement oder Silikat besteht. Die Blechwandung der Sicherheitsbox wird hierbei vorzugsweise an der Innenseite mit der Brandschutzschicht bzw. mit Brandschutzplatten ausgekleidet.

In einer Variante der Erfindung ist die Sicherheitsbox zur Verwendung im Freien ausgelegt und deshalb witterungsbeständig ausgeführt. Die Sicherheitsbox ist hierzu vorzugsweise spritzwassergeschützt, regenwassergeschützt, thermisch isoliert und/oder staubgeschützt.

Weiterhin besteht im Rahmen der Erfindung die Möglichkeit, dass die Sicherheitsbox mit dem darin befindlichen mobilen Batterieladegerät auf einem Fundament befestigt ist. Beispielsweise kann die Sicherheitsbox am Boden festgeschraubt werden.

Die Erfindung ist jedoch nicht auf Ausführungsformen beschränkt, bei denen die Sicherheitsbox stationär am Boden befestigt ist. Vielmehr ist es auch denkbar, dass die Sicherheitsbox mit dem darin befindlichen Batterieladegerät mobil ist und zu den gewünschten Einsatzorten transportiert wird.

Weiterhin weist die Sicherheitsbox bei der erfindungsgemäßen Batterieladestelle vorzugsweise eine Lüftungsöffnung und/oder ein Gebläse auf, um eine Belüftung und/oder Entlüftung der Sicherheitsbox zu gewährleisten. Dies ist vorteilhaft, weil das in der Sicherheitsbox befindliche Batterieladegerät im Betrieb Verlustwärme erzeugt, die abgeführt werden muss, um eine übermäßige Erwärmung in der Sicherheitsbox zu vermeiden.

In einer Variante der Erfindung weist die Sicherheitsbox eine Tür auf, die eine Entnahme des Batterieladegeräts aus der Sicherheitsbox bzw. das Einführen des Batterieladegeräts in die Sicherheitsbox ermöglicht. Es ist jedoch alternativ auch möglich, dass die Sicherheitsbox einseitig offen oder vollständig geschlossen ist.

Darüber hinaus besteht im Rahmen der Erfindung die Möglichkeit, dass in der Sicherheitsbox mehrere Batterieladegeräte angeordnet sind, wobei die einzelnen Batterieladegeräte jeweils in getrennten Abteilen angeordnet sein können. Hierbei besteht die Möglichkeit, dass die einzelnen Abteile der Sicherheitsbox durch Trennwände voneinander getrennt sind.

Ferner weist die erfindungsgemäße Batterieladestelle eine automatische Überwachungseinrichtung auf, um eine Störung (z.B. eine Brandentwicklung) der Batterieladestelle zu erkennen.

Bei der Überwachungseinrichtung handelt es sich also vorzugsweise um einen automatischen Brandmelder, der eine Brandentwicklung in der Sicherheitsbox erkennt. Der Brandmelder kann beispielsweise als Brandgasmelder, Wärmemelder, Rauchmelder, Flammenmelder oder Multikriterien-Melder ausgebildet sein, der mehrere Sensoren aufweist. Als Rauchmelder lassen sich beispielsweise optische Rauchmelder und Ionisationsmelder einsetzen, wobei die vorstehend erwähnten Typen von Brandmeldern an sich aus dem Stand der Technik bekannt sind und deshalb nicht näher beschrieben werden müssen.

Die Überwachungseinrichtung kann jedoch auch elektrische Betriebsgrößen der Batterieladestelle erfassen. Beispielsweise kann die Überwachungseinrichtung den Ladestrom und/oder die Ladespannung bei der Aufladung einer Batterie messen. Ferner ist es möglich, dass die Überwachungseinrichtung den Versorgungsstrom misst, mit dem das Batterieladegerät selbst mit Strom versorgt wird.

Das Signal der Überwachungseinrichtung (z.B. des Brandmelders) kann auf verschiedene Arten ausgewertet werden, die im Folgenden kurz beschrieben werden.

In einer Variante der Erfindung ist die automatische Überwachungseinrichtung über eine drahtgebundene oder drahtlose Verbindung mit einer Brandmeldezentrale verbunden, um bei einer detektierten oder bevorstehenden Brandentwicklung in der Sicherheitsbox einen Feueralarm auszulösen.

In einer anderen Variante der Erfindung steuert die Überwachungseinrichtung dagegen einen Trennschalter an, der bei einer Störung (z.B. im Brandfall) das Batterieladegerät von der aufzuladenden Batterie und/oder von dem Stromversorgungsnetz trennt, um eine Brandausbreitung zu verhindern.

Darüber hinaus besteht im Rahmen der Erfindung die Möglichkeit, dass die Überwachungseinrichtung (z.B. der Brandmelder) im Brandfall eine Feuerlöscheinrichtung aktiviert, die in der Sicherheitsbox angeordnet ist.

Der elektrische Anschluss an das Stromversorgungsnetz bzw. die aufzuladende Batterie erfolgt vorzugsweise über einen Anschluss, der von außen zugänglich in der Wandung der Sicherheitsbox angeordnet ist, so dass die Sicherheitsbox nicht geöffnet werden muss, um das Batterieladegerät mit der Batterie bzw. dem Stromversorgungsnetz zu verbinden.

Ferner besteht im Rahmen der Erfindung die Möglichkeit, dass die erfindungsgemäße Batterieladestelle einen integrierten Behälter für destilliertes Wasser aufweist, wobei der Behälter wahlweise in der Sicherheitsbox oder auf der Sicherheitsbox angeordnet sein kann.

Darüber hinaus kann die erfindungsgemäße Batterieladestelle ein Feuerlöschgerät aufweisen, das in der Sicherheitsbox oder an der Außenseite der Sicherheitsbox angeordnet sein kann.

Weiterhin ist zu erwähnen, dass die Erfindung nicht auf die vorstehend beschriebene erfindungsgemäße Batterieladestelle beschränkt ist, sondern auch ein Betriebsverfahren für eine Batterieladestelle umfasst, das vorsieht, dass das Batterieladegerät in einer Sicherheitsbox angeordnet wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht einer erfindungsgemäßen Batterieladestelle,
- Figur 2: ein vereinfachtes Blockschaltbild der Batterieladestelle aus Figur 1 sowie
- Figur 3: ein alternatives Ausführungsbeispiel einer erfindungsgemäßen Batterieladestelle mit mehreren Batterieladegeräten.

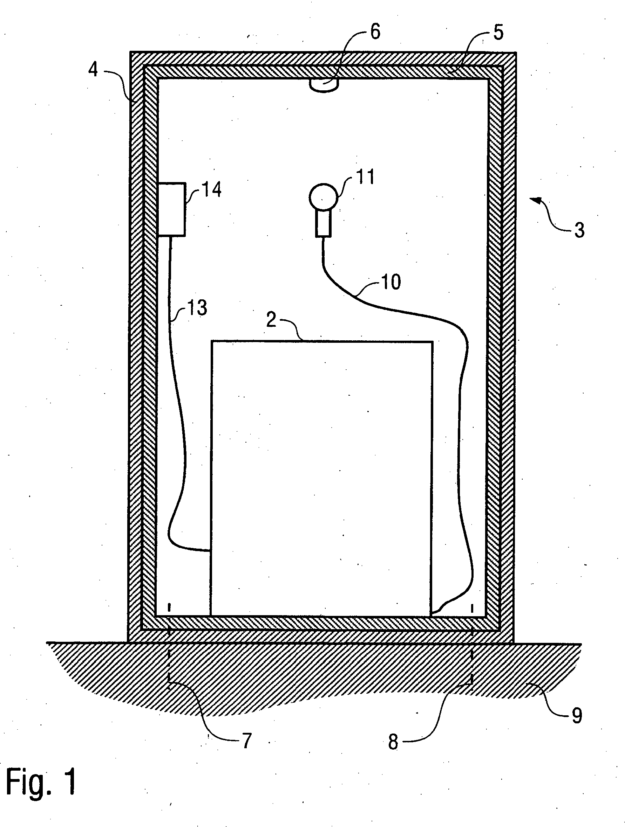

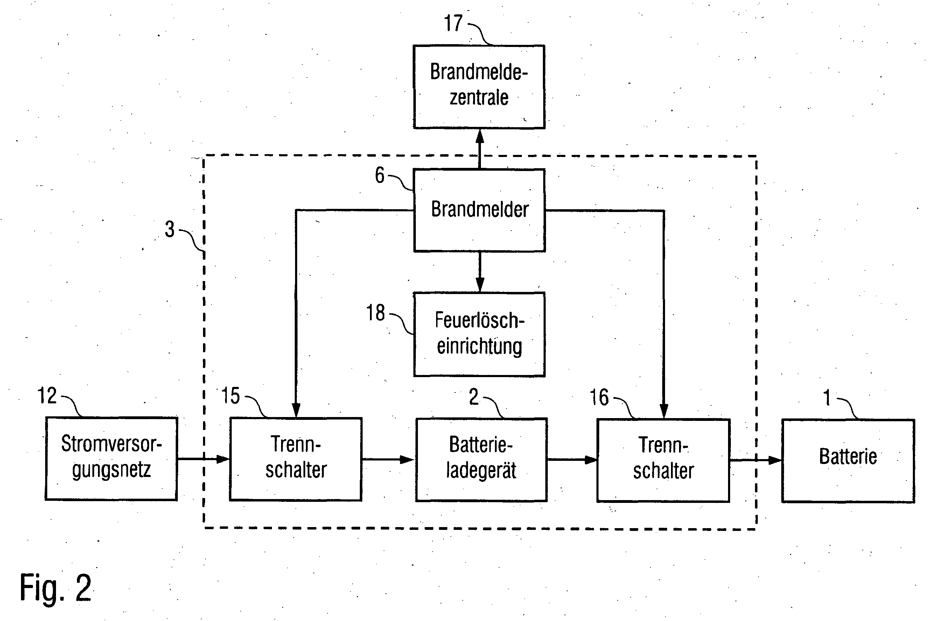

Die Querschnittsansicht in Figur 1 zeigt eine erfindungsgemäße Batterieladestelle, die vorzugsweise in kleinen Betrieben mit einer geringen Anzahl von Elektrofahrzeugen eingesetzt werden kann, um eine Batterie 1 (vgl. Fig. 2) eines Elektrofahrzeugs aufzuladen.

Hierzu weist die erfindungsgemäße Batterieladestelle ein herkömmliches mobiles Batterieladegerät 2 auf, das in einer Sicherheitsbox 3 angeordnet ist, wobei die Sicherheitsbox 3 das Batterieladegerät 2 vor belastenden Umgebungseinflüssen schützt, wie beispielsweise Staub, Feuchtigkeit und Verschmutzung. Die Sicherheitsbox 3 hat in diesem Ausführungsbeispiel eine Breite von 90 cm, eine Höhe von 200 cm und eine Tiefe von 75 cm.

Darüber hinaus gewährleistet die Sicherheitsbox 3 einen Brandschutz, um bei einer Brandentwicklung in der Sicherheitsbox 3 ein Überschlagen der Flammen auf die Umgebung zu verhindern. Hierzu weist die Sicherheitsbox 3 eine äußere Wandung 4 aus Blech auf, wobei die äußere Wandung 4 innen mit einer Brandschutzschicht 5 aus Silikat ausgekleidet ist. Die aus Blech bestehende äußere Wandung 4 bietet in Verbindung mit der inneren Brandschutzschicht 5 einen Brandschutz entsprechend der Brandschutzklasse F30 gemäß DIN 4102.

An der Oberseite der Sicherheitsbox 3 ist innen ein automatischer Brandmelder 6 angebracht, der auf eine Brandentwicklung innerhalb der Sicherheitsbox 3 anspricht, wie später noch detailliert beschrieben wird.

Die Sicherheitsbox 3 ist zusammen mit dem darin befindlichen Batterieladegerät 2 durch Schrauben 7, 8 auf einem Fundament 9 befestigt, wobei die beiden Schrauben 7, 8 hier nur schematisch dargestellt sind.

Die Stromversorgung des Batterieladegeräts 2 erfolgt über ein Elektrokabel 10, das mit einem von außen zugänglichen Stromanschluss 11 verbunden ist. Bei der Inbetriebnahme der erfindungsgemäßen Batterieladestelle muss dann lediglich ein weiteres Elektrokabel außen an den Stromanschluss 11 angeschlossen und mit einem Stromversorgungsnetz 12 (vgl. Fig. 2) verbunden werden. Der von außen zugängliche Stromanschluss 11 bietet den Vorteil, dass das Batterieladegerät 2 an das Stromversorgungsnetz 12 angeschlossen werden kann, ohne dass die Sicherheitsbox 3 geöffnet werden muss.

Der Anschluss der aufzuladenden Batterie 1 erfolgt über ein weiteres Elektrokabel 13, dessen Stecker in den Betriebspausen in einer Halterung 14 an einer Seitenwand der Sicherheitsbox 3 gehalten wird.

Im Folgenden wird nun unter Bezugnahme auf Figur 2 das Betriebsverfahren der Batterieladestelle gemäß Figur 1 erläutert.

Hierbei ist zu erwähnen, dass die erfindungsgemäße Batterieladestelle 2 Trennschalter 15, 16 aufweist, wobei der Trennschalter 15 das Batterieladegerät 2 mit dem Stromversorgungsnetz 12 verbinden kann, während der Trennschalter 20 das Batterieladegerät 2 mit der aufzuladenden Batterie 1 verbinden kann. Die beiden Trennschalter 15, 16 werden von dem Brandmelder 6 angesteuert, wobei die beiden Trennschalter 15, 16 das Batterieladegerät 2 von dem Stromversorgungsnetz 12 und von der aufzuladenden Batterie 1 trennen, wenn der Brandmelder 6 eine Brandentwicklung innerhalb der Sicherheitsbox 3 detektiert.

Darüber hinaus gibt der Brandmelder 6 im Brandfall ein Alarmsignal an eine externe Brandmeldezentrale 17, wobei die Verbindung zu der Brandmeldezentrale 17 beispielsweise durch die in vielen Betrieben ohnehin vorhandene Brandmeldeanlage erfolgen kann.

Schließlich aktiviert der Brandmelder 6 im Brandfall auch eine Feuerlöscheinrichtung 18, die in der Sicherheitsbox 3 angeordnet ist und einen eventuell entstehenden Brand frühzeitig löscht.

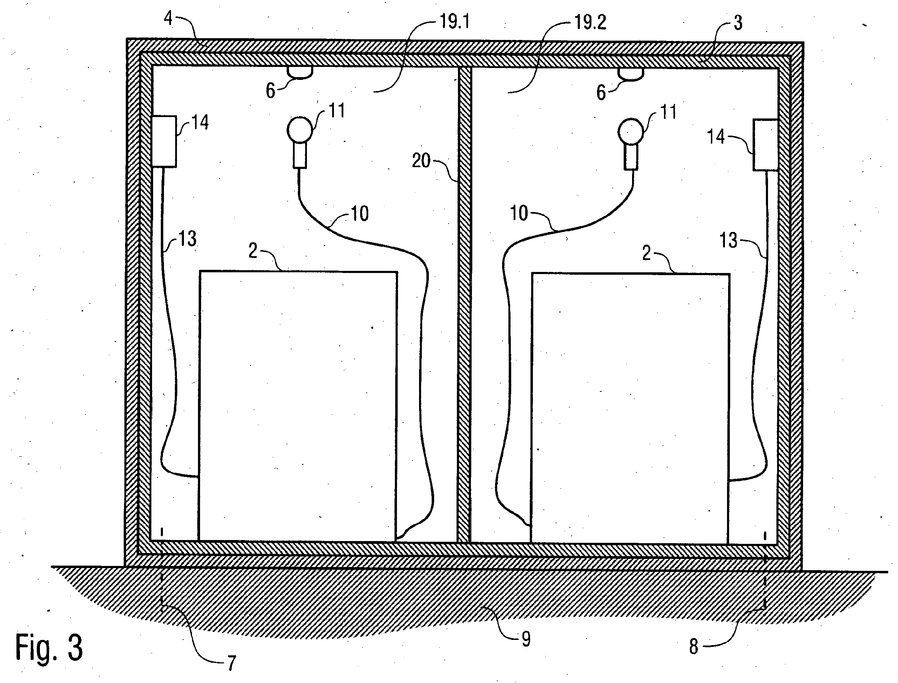

Figur 3 zeigt eine Querschnittsansicht eines alternativen Ausführungsbeispiels einer erfindungsgemäßen Batterieladestelle, wobei dieses Ausführungsbeispiel weitgehend mit dem vorstehend beschriebenen und in den Figuren 1 und 2 dargestellten Ausführungsbeispiel übereinstimmt. Zur Vermeidung von Wiederholungen wird deshalb weitgehend auf die vorstehende Beschreibung verwiesen, wobei für entsprechende Bauteile im Folgenden dieselben Bezugszeichen verwendet werden.

Eine Besonderheit dieses Ausführungsbeispieles besteht darin, dass sich in der Sicherheitsbox 3 zwei Abteile 19.1, 19.2 befinden, in denen jeweils ein Batterieladegerät 2.1, 2.2 angeordnet ist. Die beiden Abteile 19.1, 19.2 sind hierbei durch eine Trennwand 20 voneinander getrennt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Batterie
- 2: Batterieladegerät
- 3: Sicherheitsbox
- 4: Äußere Wandung
- 5: Brandschutzschicht
- 6: Brandmelder
- 7, 8: Schrauben
- 9: Fundament
- 10: Elektrokabel
- 11: Stromanschluss
- 12: Stromversorgungsnetz
- 13: Elektrokabel
- 14: Halterung
- 15: Trennschalter
- 16: Trennschalter
- 17: Brandmeldezentrale
- 18: Feuerlöscheinrichtung
- 19.1, 19.2: Abteile
- 20: Trennwand

## Patentansprüche

1. Batterieladestelle mit
a) einem Batterieladegerät (2) zum Aufladen einer wiederaufladbaren elektrischen Batterie (1), insbesondere einer Batterie (1) eines Elektrofahrzeugs,
b) einer Sicherheitsbox (3), in der das Batterieladegerät (2) angeordnet ist,
**gekennzeichnet durch**
c) eine automatische Überwachungseinrichtung, insbesondere einen Brandmelder (6), zur Erkennung eines Störungszustands, insbesondere einer Brandentwicklung, in der Sicherheitsbox (3), und
d) einen ersten Trennschalter (16), der das Batterieladegerät (2) mit der Batterie (1) verbindet und von der Überwachungseinrichtung (6) so angesteuert wird, dass der erste Trennschalter (16) im Brandfall das Batterieladegerät (2) von der Batterie (1) trennt.

2. Batterieladestelle nach Anspruch 1,
**dadurch gekennzeichnet,**
a) **dass** die Sicherheitsbox (3) eine Wandung (4) aufweist, die mindestens teilweise aus Blech besteht, und/oder
b) **dass** die Sicherheitsbox (3) eine Wandung aufweist, die mindestens teilweise aus einer Brandschutzschicht (5) besteht.

3. Batterieladestelle nach Anspruch 2, **dadurch gekennzeichnet, dass** die Brandschutzschicht (5) mindestens teilweise aus Faserzement oder Silikat besteht.

4. Batterieladestelle nach einem der vorhergehenden Ansprüche, **dadurch gekennzeichnet, dass** die Sicherheitsbox (3) eine feuerhemmende, hochfeuerhemmende und/oder feuerbeständige Wandung (4, 5) aufweist, die einen Brandschutz gemäß den Brandschutzklassen F30, F60, F90, F120 oder F180 oder gemäß entsprechenden europäischen Feuerwiderstandsklassen bietet.

5. Batterieladestelle nach einem der vorhergehenden Ansprüche, **dadurch gekennzeichnet, dass** die Sicherheitsbox (3) auf einem Fundament (9) befestigt ist.

6. Batterieladestelle nach einem der vorhergehenden Ansprüche, **dadurch gekennzeichnet, dass** die Sicherheitsbox (3)
a) staubgeschützt,
b) spritzwassergesehützt,
c) witterungsbeständig,
d) im Wesentlichen geschlossen,
e) regenwasserfest und/oder
f) thermisch isoliert
ist.

7. Batterieladestelle nach einem der vorhergehenden Ansprüche, **dadurch gekennzeichnet, dass** die Sicherheitsbox (3) zur Belüftung und/oder zur Entlüftung eine Lüftungsöffnung und/oder ein Gebläse aufweist.

8. Batterieladestelle nach einem der vorhergehenden Ansprüche, **dadurch gekennzeichnet, dass** die Sicherheitsbox (3) eine Tür aufweist.

9. Batterieladestelle nach einem der vorhergehenden Ansprüche, **dadurch gekennzeichnet, dass** in der Sicherheitsbox (3) mehrere Batterieladegeräte angeordnet sind.

10. Batterieladestelle nach Anspruch 9, **dadurch gekennzeichnet, dass** die Sicherheitsbox (3) mehrere Abteile (18.1, 18.2) aufweist, in denen jeweils eines der Batterieladegeräte (2) angeordnet ist.

11. Batterieladestelle nach Anspruch 10, **dadurch gekennzeichnet, dass** die einzelnen Abteile (18.1, 18.2) jeweils durch eine Trennwand (19) voneinander getrennt sind.

12. Batterieladestelle nach einem der vorhergehenden **Ansprüche, gekennzeichnet durch**
a) einen zweiten Trennschalter (15), der das Batterieladegerät (2) mit einem Stromversorgungsnetz (12) verbindet und von der Überwachungseinrichtung (6) so angesteuert wird, dass der zweite Trennschalter (15) im Brandfall das Batterieladegerät (2) von dem Stromversorgungsnetz (12) trennt, und/oder
b) eine drahtgebundene oder drahtlose Verbindung der Überwachungseinrichtung (6) mit einer Brandmeldezentrale (17) zur Auslösung eines Feueralarms bei einer Brandentwicklung in der Sicherheitsbox (3).

13. Batterieladestelle nach einem der vorhergehenden Ansprüche, **dadurch gekennzeichnet, dass** in der Wandung (4, 5) der Sicherheitsbox (3) ein Anschluss (11) angeordnet ist, über den das Batterieladegerät (2) ohne eine Öffnung der Sicherheitsbox (3) mit dem Stromversorgungsnetz (12) und/oder mit der Batterie (1) verbunden werden kann.

14. Betriebsverfahren für eine Batterieladestelle, insbesondere nach einem der vorhergehenden Ansprüche, mit einem Batterieladegerät (2) zum Aufladen einer wiederaufladbaren elektrischen Batterie (1), insbesondere einer Batterie (1) eines Elektrofahrzeugs, wobei das Batterieladegerät (2) in einer Sicherheitsbox (3) angeordnet wird, **gekennzeichnet durch** folgende Schritte:
a) Überwachung der Sicherheitsbox (3) auf eine Brandentwicklung in der Sicherheitsbox (3), und
b) Trennung-des Batterieladegeräts (2) von der Batterie (1) bei einer Brandentwicklung in der Sicherheitsbox (3).

15. Betriebsverfahren nach Anspruch 14, **gekennzeichnet durch** folgende Schritte:
a) Trennung des Batterieladegeräts (2) von einem Stromversorgungsnetz (12) bei einer Brandentwicklung in der Sicherheitsbox (3), und/oder
b) Drahtlose oder drahtgebundene Alarmierung einer Brandmeldezentrale (17) bei einer Brandentwicklung in der Sicherheitsbox (3).

## Claims

1. Battery charging point with
a) a battery charging device (2) for charging a rechargeable electric battery (1), especially a battery (1) of an electric vehicle,
b) a safety box (3), in which the battery charging device (2) is disposed,
**characterised by**
c) an automatic monitoring device, especially a fire detector (6), to identify a fault state, especially the development of a fire, in the safety box (3), and
d) a first circuit-breaker (16), which connects the battery charging device (2) with the battery (1) and is actuated by the monitoring device (6) in such a way that the first circuit-breaker (16) disconnects the battery charging device (2) from the battery (1) in the event of a fire.

2. Battery charging point according to claim 1,
**characterised in that**,
a) the safety box (3) comprises a wall (4), which consists at least in part of sheet metal, and/or
b) the safety box (3) comprises a wall, which consists at least in part of a fire protection layer (5).

3. Battery charging point according to claim 2, **characterised in that** the fire protection layer (5) consists at least in part of fibre cement or silicate.

4. Battery charging point according to one of the preceding claims, **characterised in that** the safety box (3) comprises a fire-retardant, highly fire-retardant and/or fire-resistant wall (4, 5), which provides fire protection in accordance with fire protection
classes F30, F60, F90, F120 or F180, or in accordance with appropriate European fire resistance classes.

5. Battery charging point according to one of the preceding claims, **characterised in that** the safety box (3) is fastened to a base (9).

6. Battery charging point according to one of the preceding claims, **characterised in that** the safety box (3) is
a) protected against dust,
b) protected against splash water,
c) weather-resistant,
d) substantially closed,
e) rainwaterproof and/or
f) thermally insulated.

7. Battery charging point according to one of the preceding claims, **characterised in that** the safety box (3) comprises a ventilation opening and/or a fan for inward and/or outward ventilation.

8. Battery charging point according to one of the preceding claims, **characterised in that** the safety box (3) comprises a door.

9. Battery charging point according to one of the preceding claims, **characterised in that** several battery charging devices are disposed in the safety box (3).

10. Battery charging point according to claim 9, **characterised in that** the safety box (3) comprises several compartments (18.1, 18.2), in each of which one of the battery charging devices (2) is disposed.

11. Battery charging point according to claim 10, **characterised in that** the individual compartments (18.1, 18.2) are each separated from one another by means of a partition (19).

12. Battery charging point according to one of the preceding claims, **characterised by**
a) a second circuit-breaker (15), which connects the battery charging device (2) with a power supply system (12) and is actuated by the monitoring device (6) in such a way that the second circuit-breaker (15) disconnects the battery charging device (2) from the power supply system (12) in the event of a fire, and/or
b) a wired or wireless connection between the monitoring device (6) and a central fire alarm system (17), to trigger a fire alarm in the event of the development of a fire in the safety box (3).

13. Battery charging point according to one of the preceding claims, **characterised in that**, disposed in the wall (4, 5) of the safety box (3), there is a connection point (11), by way of which the battery charging device (2) can be connected with the power supply system (12) and/or with the battery (1) without the safety box (3) being opened.

14. Operating method for a battery charging point, especially according to one of the preceding claims, with a battery charging device (2) for charging a rechargeable electric battery (1) especially a battery (1) of an electric vehicle, whereby the battery charging device (2) is disposed in a safety box (3), **characterised by** the following steps:
a) monitoring of the safety box (3) with regard to the development of a fire in the safety box (3), and
b) disconnection of the battery charging device (2) from the battery (1) in the event of the development of a fire in the safety box (3).

15. Operating method according to claim 14, **characterised by** the following steps:
a) disconnection of the battery charging device (2) from a power supply system (12) in the event of the development of a fire in the safety box (3), and/or
b) wireless or wired sending of an alarm signal to a central fire alarm system (17) in the event of the development of a fire in the safety box (3).

## Revendications

1. Point de chargement de batterie avec
a) un appareil de chargement de batterie (2) pour le chargement d'une batterie (1) électrique rechargeable, en particulier d'une batterie (1) d'un véhicule électrique,
b) une boîte de sécurité (3), dans laquelle l'appareil de chargement de batterie (2) est agencé,
**caractérisé par**
c) un dispositif de surveillance automatique, en particulier un détecteur d'incendie (6) pour la détection d'un état de panne, en particulier d'un départ d'incendie, dans la boîte de sécurité (3) et
d) un premier disjoncteur (16) qui relie l'appareil de chargement de batterie (2) à la batterie (1) et est commandé par le dispositif de surveillance (6) de sorte que le premier disjoncteur (16) sépare, en cas d'incendie, l'appareil de chargement de batterie (2), de la batterie (1).

2. Point de chargement de batterie selon la revendication 1,
**caractérisé en ce que**
a) la boîte de sécurité (3) présente une paroi (4) qui se compose au moins en partie de tôle et/ou
b) la boîte de sécurité (3) présente une paroi qui se compose au moins en partie d'une couche ignifuge (5).

3. Point de chargement de batterie selon la revendication 2, **caractérisé en ce que** la couche ignifuge (5) se compose au moins en partie de fibrociment ou de silicate.

4. Point de chargement de batterie selon l'une quelconque des revendications précédentes, **caractérisé en ce que** la boîte de sécurité (3) présente une paroi (4, 5) ignifuge, très ignifuge et/ou réfractaire qui offre une protection contre le feu selon les classes de protection contre le feu F30, F60, F90, F120 ou F180 ou selon des classes de résistance au feu européennes correspondantes.

5. Point de chargement de batterie selon l'une quelconque des revendications précédentes, **caractérisé en ce que** la boîte de sécurité (3) est fixée sur une semelle (9).

6. Point de chargement de batterie selon l'une quelconque des revendications précédentes, **caractérisé en ce que** la boîte de sécurité (3) est
a) protégée de la poussière,
b) protégée des projections d'eau,
c) résistante aux conditions atmosphériques,
d) sensiblement fermée,
e) résistante à l'eau de pluie et/ou
f) isolée thermiquement.

7. Point de chargement de batterie selon l'une quelconque des revendications précédentes, **caractérisé en ce que** la boîte de sécurité (3) présente pour la ventilation et/ou la purge d'air une ouverture de ventilation et/ou une soufflante.

8. Point de chargement de batterie selon l'une quelconque des revendications précédentes, **caractérisé en ce que** la boîte de sécurité (3) présente une porte.

9. Point de chargement de batterie selon l'une quelconque des revendications précédentes, **caractérisé en ce que** plusieurs appareils de chargement de batterie sont agencés dans la boîte de sécurité (3).

10. Point de chargement de batterie selon la revendication 9, **caractérisé en ce que** la boîte de sécurité (3) présente plusieurs compartiments (18.1, 18.2), dans lesquels est agencé respectivement l'un des appareils de chargement de batterie (2).

11. Point de chargement de batterie selon la revendication 10, **caractérisé en ce que** les compartiments individuels (18.1, 18.2) sont séparés l'un de l'autre respectivement par une paroi de séparation (19).

12. Point de chargement de batterie selon l'une quelconque des revendications précédentes, **caractérisé par**
a) un second disjoncteur (15) qui relie l'appareil de chargement de batterie (2) à un réseau d'alimentation électrique (12) et est commandé par le dispositif de surveillance (6) de sorte que le second disjoncteur (15) sépare, en cas d'incendie, l'appareil de chargement de batterie (2), du réseau d'alimentation électrique (12) et/ou
b) une liaison filaire ou sans fil du dispositif de surveillance (6) à la centrale incendie (17) pour le déclenchement d'une alarme incendie pour un départ d'incendie dans la boîte de sécurité (3).

13. Point de chargement de batterie selon l'une quelconque des revendications précédentes, **caractérisé en ce qu'**un raccordement (11) est agencé dans la paroi (4, 5) de la boîte de sécurité (3), par lequel l'appareil de chargement de batterie (2) peut être relié sans ouverture de la boîte de sécurité (3) au réseau d'alimentation électrique (12) et/ou à la batterie (1).

14. Procédé de fonctionnement pour un point de chargement de batterie, en particulier selon l'une quelconque des revendications précédentes, avec un appareil de chargement de batterie (2) pour le chargement d'une batterie électrique rechargeable (1), en particulier d'une batterie (1) d'un véhicule électrique, l'appareil de chargement de batterie (2) étant agencé dans une boîte de sécurité (3), **caractérisé par** les étapes suivantes :
a) la surveillance de la boîte de sécurité (3) quant à un départ d'incendie dans la boîte de sécurité (3) et
b) la séparation de l'appareil de chargement de batterie (2) de la batterie (1) en cas de départ d'incendie dans la boîte de sécurité (3).

15. Procédé de fonctionnement selon la revendication 14, **caractérisé par** les étapes suivantes :
a) la séparation de l'appareil de chargement de batterie (2) d'un réseau d'alimentation électrique (12) en cas de départ d'incendie dans la boîte de sécurité (3) et/ou
b) le déclenchement d'une alarme sans fil ou filaire d'une centrale incendie (17) en cas de départ d'incendie dans la boîte de sécurité (3).
